# EUROPÄISCHE PATENTSCHRIFT

(11) **EP 3 774 687 B1**
(45) Veröffentlichungstag und Bekanntmachung des Hinweises auf die Patenterteilung: **11.09.2024**
(21) Anmeldenummer: 19721526.2
(22) Anmeldetag: 13.03.2019
(51) Int. Cl.: C04B 28/02, C04B 20/00

(54) **MIKROFASERBEWEHRTER HOCHLEISTUNGSBETON**
MICROFIBER-REINFORCED HIGH-STRENGTH CONCRETE
BÉTON HAUTE PERFORMANCE ARMÉ DE MICROFIBRES

(30) Priorität: 04.04.2018 DE 102018107926
(43) Veröffentlichungstag der Anmeldung: 17.02.2021
(73) Patentinhaber: Universität Kassel, 34125 Kassel (DE)
(72) Erfinder: NIENDORF, Thomas, 34119 Kassel (DE); KROOSS, Philipp, 34119 Kassel (DE); MIDDENDORF, Bernhard, 34379 Calden (DE); WETZEL, Alexander, 34302 Guxhagen (DE); SEIM, Werner, 34130 Kassel (DE); FEHLING, Ekkehard, 34346 Hann. Münden (DE); HEIM, Hans-Peter, 33332 Gütersloh (DE)
(74) Vertreter: Walther Bayer Faber Patentanwälte PartGmbB
(86) Internationale Anmeldenummer: PCT/DE2019/100225
(87) Internationale Veröffentlichungsnummer: WO 2019/192647

(56) Entgegenhaltungen:
- US-A- 5 858 082

## Beschreibung

Die Erfindung betrifft ein Verfahren zur Herstellung eines mikrofaserbewehrten Betons, aufweisend eine Zementmatrix, in der ein Mikrofaserzusatz aus Faserelementen eingebracht wird, wobei die Faserelemente eine Formgedächtnislegierung aufweisen. Die Erfindung richtet sich weiterhin auf einen mikrofaserbewehrten Beton, der mit einem solchen Verfahren hergestellt ist.

### STAND DER TECHNIK

Die Kombination von Eigenschaften eines mikrofaserbewehrten Betons mit rheologischen Eigenschaften eines faserfreien Betons ist eine zentrale Zielsetzung im modernen Bauwesen. Insbesondere für Hochleistungsbetons wie den ultrahochfesten Beton (UHPC) ist der Einsatz von Mikrofasern vorteilhaft, teilweise sogar unabdingbar. Die bereits sehr guten Druckfestigkeiten des ultrahochfesten Betons lassen sich dabei durch den Einsatz von Mikrostahlfasern zusätzlich mit außergewöhnlich hohen Zugfestigkeiten kombinieren. Dies macht den Werkstoff Beton für viele sehr filigrane und somit gewichtssparende Baukonstruktionen einsetzbar und ermöglicht grundsätzlich neuartige Bauweisen. Dabei ist es bekannt, dass durch eine Fasergeometrie, beispielsweise mit Endhaken der Fasern, die Verbindung zwischen hochfester Stahlfaser und der Zementmatrix erheblich verbessert wird. Nachteilhafterweise werden jedoch rheologische Eigenschaften des Betons deutlich verschlechtert. Bei der Verwendung von Faserelementen mit Durchmessern von weniger als 1 mm bei einer Zugabe im Bereich von weniger als 2 Vol% müssen Einschränkungen bei der Verarbeitbarkeit festgestellt werden. Dabei kommt es zu sogenannten Igelbildungen, welche eine Agglomeration von Faserelementen beschreibt. Daraus ergibt sich eine deutlich ungleichmäßige Verteilung der Faserelemente in der Zementmatrix, sodass sich auch eine unvollständige Verdichtung des Betons ergibt.

Beispielsweise offenbart die US 5,858,082 A ein Verfahren zur Herstellung eines mikrofaserbewehrten Betons, aufweisend eine Zementmatrix, in der ein Mikrofaserzusatz aus Faserelementen eingebracht ist, wobei die Faserelemente eine Formgedächtnislegierung aufweisen. Der Formgedächtniseffekt der Formgedächtnislegierung wird dabei so genutzt, dass sich die Faserelemente miteinander verhaken und eine Vorspannung in der Zementmatrix aufbauen, wenn der Frischbeton auf die Übergangstemperatur der Formgedächtnislegierung erwärmt wird. Dabei wird ein mikrofaserverstärkter Beton hergestellt, der eine vorgespannte Bewehrung aus Mikrofasern aufweist. Das Antrainieren beschreibt dabei das Aufprägen einer bestimmten Form auf die Faserelemente, die diese bei Erreichen einer sogenannten Übergangstemperatur wieder erinnern, also annehmen können, auch wenn die Faserelemente vorübergehend plastisch verformt wurden. Die Übergangstemperatur liegt bei gewöhnlich deutlich unterhalb der Temperatur, bei der das Antrainieren der Erinnerungsform der Faserelemente ausgeführt wird, beispielsweise mittels eines Prägeverfahrens.

Eine Verbesserung der rheologischen Eigenschaften mit den in die Zementmatrix eingebrachten Faserelementen kann mit der vorbekannten Anwendung von Faserelementen aus Formgedächtnislegierung nicht umgesetzt werden. Insbesondere wird angegeben, dass die Faserelemente eine gerade Erstreckung aufweisen sollen, um in diesem Zustand der Faserelemente den Beton zu verarbeiten, insbesondere zu vergießen. Dabei kommt es besonders stark zur Agglomeration von Faserbündeln, wodurch es bei höheren Volumenanteilen der Faserelemente in der Zementmatrix zu deutlichen Inhomogenitäten der Verteilung der Faserelemente in der Zementmatrix kommt.

### OFFENBARUNG DER ERFINDUNG

Aufgabe der Erfindung ist die Verbesserung eines Verfahrens zur Herstellung eines mikrofaserbewehrten Betons, wobei der Beton einen hohen Anteil an Faserelementen aufweisen soll, und zudem soll der mikrofaserbewehrte Beton gut verarbeitbar sein, insbesondere soll ein Vergießen des Betons möglich sein, ohne dass es vermehrt zur Agglomeration der Faserelemente zu Faserbündeln kommt.

Diese Aufgabe wird ausgehend von einem Verfahren gemäß dem Oberbegriff des Anspruches 1 und ausgehend von einem mikrofaserbewehrten Beton gemäß Anspruch 8 mit den jeweils kennzeichnenden Merkmalen gelöst. Vorteilhafte Weiterbildungen der Erfindung sind in den abhängigen Ansprüchen angegeben.

Zur Lösung der der Erfindung vorangehenden Aufgabe wird vorgeschlagen, das Verfahren zu Herstellung eines mikrofaserbewehrten Betons mit den folgenden Schritten auszuführen: Antrainieren einer Faserform der Faserelemente bei einer Temperatur, die über einer Übergangstemperatur der Formgedächtnislegierung liegt, wobei die Faserform so ausgeführt sein soll, dass ein Verhaken der Faserelemente miteinander und/oder mit der Zementmatrix möglich wird. Weiterhin umfasst das Verfahren das Abkühlen der trainierten Faserelemente, anschließend erfolgt ein plastisches Verformen der Faserelemente aus der antrainierten Faserform in eine Zwischenform unter Bildung einer kompaktierten Form. Die Zwischenform wird so gewählt, dass mit dieser ein Verhaken der Faserelemente untereinander und ein Verhaken der Faserelemente mit der Zementmatrix verhindert ist. Anschließend erfolgt ein Einbringen der Faserelemente mit mehr als 2 Vol.% in die Zementmatrix zur Bildung eines Frischbetons, welcher anschließend vergossen wird, ohne dass es zu einem Verhaken der Faserelemente kommt. Schließlich folgt ein Erwärmen des Frischbetons auf die Übergangstemperatur, sodass sich die Faserelemente in die Faserform unter einem Verhaken der Faserelemente rückbilden können.

Im Ergebnis wird ein mikrofaserbewehrter Beton herstellbar, der sehr gut vergossen werden kann und bei dem der Anteil an Faserelementen deutlich erhöht werden kann. Der Effekt der deutlich verbesserten rheologischen Eigenschaften, also beispielsweise der Vergießbarkeit des mikrofaserbewehrten Frischbetons liegt darin, dass beim Vergießen die Faserelemente in der Zwischenform vorliegen, mit der ein Verhaken der Faserelemente verhindert ist. Dadurch wird auch die Igelbildung, also die Agglomeration der Faserelemente zu Faserbündeln, deutlich reduziert, und es wird auch bei filigranen Gussformen ein mikrofaserbewehrter Beton bereitgestellt, der eine homogene Verteilung der Faserelemente aufweist. Im Ergebnis ergibt sich damit die Möglichkeit, die Festigkeiten des Betons deutlich zu steigern, wobei trotz der gesteigerten Festigkeiten des Betons eine Verarbeitbarkeit auch beispielsweise filigraner Strukturen möglich bleibt.

Das Antrainieren der Faserform der Faserelemente kann beispielsweise bei einer Temperatur von 300°C bis 400°C und insbesondere bei einer Temperatur von 340°C bis 360°C erfolgt. Bevorzugt erfolgt das Antrainieren der Faserform bei einer Temperatur von 350°C.

Auch ist es von Vorteil, dass die Faserelemente vor dem Antrainieren der Faserform eine gerade Erstreckung aufweisen. Damit können die Faserelemente auf preiswerte Weise bereitgestellt werden, beispielsweise indem die Faserelemente zunächst in Drahtform bereitgestellt und beispielsweise von einer Coil abgespult und abgelängt werden.

Beispielsweise erfolgt das Antrainieren der Faserform mittels eines Prägens der in einer geraden Form zugeführten Faserelemente in eine Faserform mit an- oder umgebogenen Faserenden. Der Vorgang des Prägens der Faserelemente kann mit dem Ablängen der Faserelemente von einem Endlos-Draht prozesseinheitlich erfolgen.

Das Verfahren des Antrainierens der Faserform wird dabei so ausgeführt, dass die Faserform insbesondere durch in die Faserelemente eingebrachte Endhaken an den Faserenden gebildet wird. Dabei kann es beispielsweise ausreichend sein, die Faserenden mit einem Knick zu versehen, diese umzubiegen oder als Widerhaken auszuformen. Die Grundform der Faserform behält dabei vorzugsweise eine längliche Erstreckung, um den Effekt der Bewehrung aufrecht zu erhalten.

Zur Bildung der Zwischenform aus der antrainierten Faserform werden die Faserelemente erfindungsgemäß in eine kompaktierte Form überführt und die kompaktierte Form muss so ausgeführt sein, dass ein Verhaken der Faserelemente untereinander und ein Verhaken der Faserelemente mit der Zementmatrix nicht mehr möglich ist. Die kompaktierte Form kann beispielsweise eine Kringelform, eine gewellte oder tordierte Form umfassen oder die Zwischenform weist eine Wickelform auf, wodurch ein Verhaken der Faserelemente verhindert ist. Die Wickelform oder Knäulform kann insbesondere so ausgeführt werden, dass die Enden der Faserelemente in einem Knäul oder einem Kringel, einem Wickel oder einer sonstigen kompaktierten Form nach innen weisen. Dadurch können die Faserelemente in ihrer Zwischenform aneinander gelangen, ohne dass sich diese miteinander verhaken oder in sonstiger Weise einen Formschluss miteinander bilden und agglomerieren. Die Rheologie des Frischbetons im Vergussfähigen Zustand wird in Folge des Nichtverhakens der Faserelemente signifikant verbessert, da sich keine Agglomerationen von Faserelementen bilden können. Wird anschließend der Frischbeton mit den Faserelementen in der Zwischenform im verarbeiteten, also beispielsweise vergossenen Zustand, auf die Übergangstemperatur wieder erhitzt, verlieren die Faserelemente ihre Zwischenform wieder und erinnern die antrainierte Faserform, die die gewünschten Endhaken aufweisen, indem die Faserelemente die antrainierte Form wieder erinnern. Ein Formschlusseffekt der Faserelemente untereinander und der Faserelemente mit der Zementmatrix wird damit wieder hergestellt, was erst nach Herstellung der gewünschten Gussform des Bauteils aus dem mikrofaserbewehrten Beton erfolgt.

Beispielsweise kann die Übergangstemperatur einen Wert von 40°C bis 50°C aufweisen. Die Höhe der Übergangstemperatur hängt dabei insbesondere von dem Werkstoff der Formgedächtnislegierung ab. Dabei werden nicht nur die Faserelemente, sondern die gesamte Zementmatrix auf die Übergangstemperatur erwärmt, sodass sich mit der Rückführung der Faserelemente von der Zwischenform in die antrainierte Form zugleich eine verbesserte und beschleunigte Aushärtung des Betons ergibt.

Erfindungsgemäß werden die Faserelemente mit mehr als 2 Vol% in die Zementmatrix eingegeben, wobei die Faserelemente eine Länge von 5 mm bis 50 mm, bevorzugt 10 mm und/oder mit einem Durchmesser von 0,1 mm bis 2 mm in die Zementmatrix eingegeben werden. Die Faserelemente müssen dabei keinen Kreisquerschnitt aufweisen und können beispielsweise auch einen rechteckigen Querschnitt oder sogar einen undefinierten Querschnitt aufweisen. Die geometrischen Abmessungen der Faserelemente hängen dabei insbesondere von der zu erzeugenden Geometrie des Bauteils ab, das mit dem mikrofaserbewehrten Beton hergestellt werden soll.

Die Erfindung richtet sich weiterhin auf einen mikrofaserbewehrten Beton, der mit dem erfindungsgemäßen Verfahren hergestellt wurde. Dabei können die Faserelemente eine Formgedächtnislegierung umfassend eine Kupfer- und/oder Eisenbasis aufweisen. Auch ist es von Vorteil, dass die Faserelemente im Festbeton miteinander und/oder mit der Zementmatrix verhakt sind, insbesondere durch in die Faserelemente eingebrachte Endhaken.

### BEVORZUGTES AUSFÜHRUNGSBEISPIEL DER ERFINDUNG

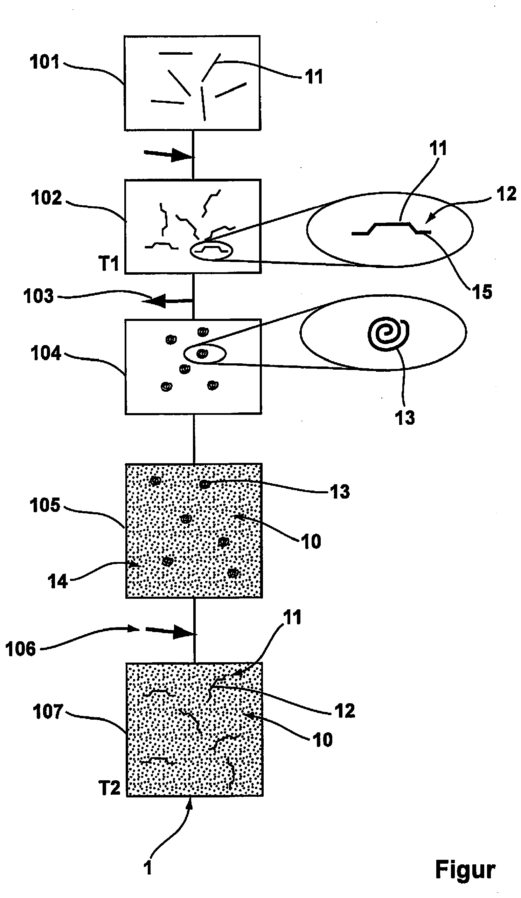

Weitere, die Erfindung verbessernde Maßnahmen werden nachstehend gemeinsam mit der Beschreibung eines bevorzugten Ausführungsbeispiels der Erfindung anhand der einzigen Figur näher dargestellt. Es zeigt:
die Figur eine schematische Abfolge der Schritte des erfindungsgemäßen Verfahrens zur Herstellung eines mikrofaserbewehrten Betons.

Die Figur zeigt eine Abfolge von mehreren Verfahrensschritten 101 bis 107, die ein erfindungsgemäßes Verfahren zur Herstellung eines mikrofaserbewehrten Betons 1 beschreiben.

Das Verfahren beginnt mit dem Bereitstellen 101 von Faserelementen 11 und dem Erwärmen der Faserelemente 11 auf eine Temperatur, die über einer Übergangstemperatur liegt. Die Übergangstemperatur der Faserelemente 11 aus einer Formgedächtnislegierung ist die Temperatur, oberhalb der sich die Formgedächtnislegierung an eine ursprünglich antrainierte geometrische Form erinnert, indem sich das Bauteil aus der Formgedächtnislegierung in diese erinnerte Form zurückbildet.

Der nächste Schritt des erfindungsgemäßen Verfahrens wird durch ein Antrainieren 102 in eine Faserform gebildet, wobei die Faserelemente 11 beispielsweise durch einen Prägevorgang oder einer sonstigen plastischen Verformungsvorgang in die gewünschte Form gebracht werden, die bei einem Erreichen der Übergangstemperatur durch die Formgedächtnislegierung erinnert werden soll. Anschließend erfolgt in einem weiteren Schritt das Abkühlen 103 der trainierten Faserelemente 11 von einer Temperatur T1 zum Antrainieren der Faserform beispielsweise auf eine Raumtemperatur.

In einem weiteren Schritt 104 erfolgt ein plastisches Verformen der Faserelemente in eine Zwischenform 13, die so gebildet ist, dass ein Verhaken der Faserelemente zueinander und auch mit einer Zementmatrix unterbunden ist.

Darauf folgt das Einbringen 105 der Faserelemente in der Zwischenform 13 in die Zementmatrix 10 und das Vergießen des Frischbetons. Ist der Frischbeton vergossen, erfolgt das Erwärmen 106 des Frischbetons auf eine Übergangstemperatur T2, sodass anschließend der Erhalt 107 des mikrofaserbewehrten Betons erfolgt. Im Verfahrensschritt 107 liegen dabei für das Vergießen des Betons die Faserelemente 11 wieder in der antrainierten Form vor, sodass der festigkeitssteigernde Effekt der Faserelemente 11 in der Zementmatrix 10 trotz eines einfachen vorangegangenen Vergießens des Frischbetons voll ausgenutzt werden kann.

Im Schritt 101 sind dabei die Faserelemente 11 gezeigt, die eine Stabform aufweisen. Vom Schritt 101 zum Schritt 102 erfolgt ein Erwärmen durch eine Wärmezugabe, gezeigt mit einem Pfeil, beispielsweise auf eine Temperatur von 350°C. Im Schritt 102 erfolgt das Prägen der Faserelemente 11 in eine Faserform 12, in der diese formschlussbildende Endhaken 15 der Faserelemente 11 aufweisen.

Auf den Schritt 102 folgend erfolgt das Abkühlen 103 von der Temperatur T1 zum Antrainieren der Faserform 12 beispielsweise wieder auf Raumtemperatur.

In Schritt 104 ist eine Kringelform der Faserelemente gezeigt, die der Zwischenform 13 entspricht. Die Faserelemente 11 in der Zwischenform 13 werden im Schritt 105 in die Zementmatrix 10 eingebracht, wodurch der Frischbeton 14 bereitgestellt wird. Anschließend erfolgt die Erwärmung auf die Temperatur T2, die die Übergangstemperatur beschreibt, sodass sich die kringelförmige Zwischenform 13 der Faserelemente 11 aus Schritt 105 in die Faserform 12 zurückbildet, die ursprünglich in Schritt 102 antrainiert wurde.

Im mikrofaserbewehrten Beton 1 kann eine wesentlich größere Anzahl von Faserelementen 11 pro Volumeneinheit der Zementmatrix 10 eingebracht werden, wodurch die Zug- und/oder Druckfestigkeit des mikrofaserbewehrten Betons 1 deutlich gesteigert wird. Beispielsweise liegt der Anteil der Faserelemente 11 in der Zementmatrix 10 bei deutlich über 2 Vol%, wobei trotz des erhöhten Faseranteils die rheologischen Eigenschaften des Betons 1 zum Verarbeiten begünstigt sind, da der rheologische Schritt des Vergießens des Frischbetons mit Faserelementen 11 erfolgt, die in der Zwischenform 13 vorliegen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 1: mikrofaserbewehrter Beton

- 10: Zementmatrix
- 11: Faserelement
- 12: Faserform
- 13: Zwischenform
- 14: Frischbeton
- 15: Endhaken

- 101: Bereitstellen von Faserelementen und Erwärmen der Faserelemente auf eine Temperatur über einer Übergangstemperatur
- 102: Antrainieren einer Faserform
- 103: Abkühlen der trainierten Faserelemente
- 104: plastisches Verformen der Faserelemente
- 105: Einbringen der Faserelemente in die Zementmatrix und Vergießen des Frischbetons
- 106: Erwärmen des Frischbetons auf eine Übergangstemperatur
- 107: Erhalt eines mikrofaserbewehrten Betons

- T1: Temperatur zum Antrainieren einer Faserform
- T2: Übergangstemperatur

## Patentansprüche

1. Verfahren zur Herstellung eines mikrofaserbewehrten Betons (1), aufweisend eine Zementmatrix (10), in der ein Mikrofaserzusatz aus Faserelementen (11) mit einer Länge von 5mm bis 50mm und/oder mit einem Durchmesser von 0,1mm bis 2mm eingebracht wird, und wobei die Faserelemente (11) eine Formgedächtnislegierung aufweisen, wobei das Verfahren wenigstens die folgenden Schritte aufweist:
- Antrainieren einer Faserform (12) der Faserelemente (11) bei einer Temperatur (T1) über einer Übergangstemperatur (T2), wobei die Faserform (12) ein Verhaken der Faserelemente (11) ermöglicht,
- Abkühlen der trainierten Faserelemente (11),
- plastisches Verformen der Faserelemente (11) aus der antrainierten Faserform in eine Zwischenform (13) unter Bildung einer kompaktierten Form, mit der ein Verhaken der Faserelemente (11) untereinander und ein Verhaken der Faserelemente (11) mit der Zementmatrix (10) verhindert ist,
- Einbringen der Faserelemente (11) in die Zementmatrix (10) zur Bildung eines Frischbetons (14), wobei die Faserelemente (11) mit mehr als 2 Vol.% in die Zementmatrix (10) eingegeben werden,
- Vergießen des Frischbetons (14) und
- Erwärmen des Frischbetons (14) auf die Übergangstemperatur (T2), sodass sich die Faserelemente (11) in die Faserform (12) unter einem Verhaken der Faserelemente (11) rückbilden.

2. Verfahren nach Anspruch 1,
**dadurch gekennzeichnet,**
**dass** das Antrainieren der Faserform (12) der Faserelemente (11) bei einer Temperatur (T1) von 300°C bis 400°C und/oder bei einer Temperatur (T1) von 340°C bis 360°C erfolgt.

3. Verfahren nach Anspruch 1 oder 2,
**dadurch gekennzeichnet,**
**dass** die Faserelemente (11) vor dem Antrainieren der Faserform (12) eine gerade Erstreckung aufweisen.

4. Verfahren nach einem der Ansprüche 1 bis 3,
**dadurch gekennzeichnet,**
**dass** das Antrainieren der Faserform (12) mittels eines Prägens der in einer geraden Form zugeführten Faserelemente (12) ausgeführt wird.

5. Verfahren nach Anspruch 4,
**dadurch gekennzeichnet,**
**dass** die antrainierte Faserform (12) wenigstens durch in die Faserelemente (12) eingeprägte Endhaken (15) an den Faserenden gebildet wird.

6. Verfahren nach einem der vorgenannten Ansprüche,
**dadurch gekennzeichnet,**
**dass** zur Bildung der kompaktierten Zwischenform (13) die Faserelemente (11) in eine Kringelform, eine Knäulform, eine gewellte oder tordierte Form oder in eine Wickelform gebracht werden, wodurch ein Verhaken der Faserelemente (11) verhindert ist.

7. Verfahren nach einem der vorgenannten Ansprüche,
**dadurch gekennzeichnet,**
**dass** die Übergangstemperatur (T2) mit einem Wert von 40°C bis 50°C gewählt wird.

8. Mikrofaserbewehrter Beton (1), hergestellt mit einem Verfahren nach einem der vorgenannten Ansprüche,
**dadurch gekennzeichnet,**
**dass** die Faserelemente (11) eine Formgedächtnislegierung umfassend eine Kupfer- und/oder Eisenbasis aufweisen.

## Claims

1. A method of manufacturing a microfiber-reinforced concrete (1) comprising a cement matrix (10) in which a microfiber additive of fiber elements (11) having a length of 5 mm to 50 mm and/or having a diameter of 0.1 mm to 2 mm is introduced and wherein the fiber elements (11) have a shape memory alloy, with the method comprising at least the following steps:
- training a fiber shape (12) of the fiber elements (11) at a temperature (T1) above a transition temperature (T2), with the fiber shape (12) making an interlocking of the fiber elements (11) possible;
- cooling the trained fiber elements (11);
- plastically deforming the fiber elements (11) from the trained fiber shape into an intermediate shape (13) while forming a compacted shape by which an interlocking of the fiber elements (11) among one another and an interlocking of the fiber elements (11) with the cement matrix (10) are prevented,
- introducing the fiber elements (11) into the cement matrix (10) to form a fresh concrete (14); with the fiber elements (11) being introduced into the cement matrix (10) at more than 2 vol.%,
- casting the fresh concrete (14); and
- heating the fresh concrete (14) to the transition temperature (T2) so that the fiber elements (11) return to the fiber shape (12) while interlocking the fiber elements (11).

2. A method in accordance with claim 1,
**characterized in that**
the training of the fiber shape (12) of the fiber elements (11) takes place at a temperature (T1) of 300°C to 400°C and/or at a temperature (T1) of 340°C to 360°C.

3. A method in accordance with claim 1 or claim 2,
**characterized in that**
the fiber elements (11) have a straight extent prior to the training of the fiber shape (12).

4. A method in accordance with one of the claims 1 to 3,
**characterized in that**
the training of the fiber shape (12) is performed by means of a shaping of the fiber elements (12) supplied in a straight shape.

5. A method in accordance with claim 4,
**characterized in that**
the trained fiber shape (12) is at least formed by end hooks (15) shaped into the fiber elements (12) at the fiber ends.

6. A method in accordance with one of the preceding claims,
**characterized in that**,
to form the compacted intermediate shape (13), the fiber elements (11) are brought into a curled form, a ball form, a wavey or twisted form, or into a wound form, whereby an interlocking of the fiber elements (11) is prevented.

7. A method in accordance with one of the preceding claims,
**characterized in that**
the transition temperature (T2) is selected at a value of 40°C to 50°C.

8. A microfiber-reinforced concrete (1) manufactured by a method in accordance with one of the preceding claims,
**characterized in that**
the fiber elements (11) have a shape memory alloy comprising a copper and/or iron base.

## Revendications

1. Procédé de fabrication d'un béton armé de microfibres (1), présentant une matrice cimentaire (10) dans laquelle est incorporé un ajout de microfibres constitué d'éléments fibreux (11) d'une longueur de 5 mm à 50 mm et/ou d'un diamètre de 0,1 mm à 2 mm, et dans lequel les éléments fibreux (11) présentent un alliage à mémoire de forme, le procédé présentant au moins les étapes suivantes :
- apprentissage d'une forme de fibre (12) des éléments fibreux (11) à une température (T1) au-dessus d'une température de transition (T2), la forme de fibre (12) permettant un accrochage des éléments fibreux (11),
- refroidissement des éléments fibreux (11) ayant été soumis à l'apprentissage,
- déformation plastique des éléments fibreux (11) à partir de la forme de fibre apprise en une forme intermédiaire (13) de manière à obtenir une forme compactée avec laquelle un accrochage des éléments fibreux (11) entre eux et un accrochage des éléments fibreux (11) avec la matrice cimentaire (10) est empêché,
- incorporation des éléments fibreux (11) dans la matrice cimentaire (10) pour former un béton frais (14), les éléments fibreux (11) étant introduits avec plus de 2 %vol dans la matrice cimentaire (10),
- coulage du béton frais (14) et
- chauffage du béton frais (14) à la température de transition (T2), de telle sorte que les éléments fibreux (11) reprennent la forme de fibre (12) entraînant ainsi un accrochage des éléments fibreux (11).

2. Procédé selon la revendication 1,
**caractérisé en ce que**
l'apprentissage de la forme de fibre (12) des éléments fibreux (11) est effectué à une température (T1) de 300 °C à 400 °C et/ou à une température (T1) de 340 °C à 360 °C.

3. Procédé selon la revendication 1 ou 2,
**caractérisé en ce que**
les éléments fibreux (11) présentent une extension rectiligne avant l'apprentissage de la forme de fibre (12).

4. Procédé selon l'une des revendications 1 à 3,
**caractérisé en ce que**
l'apprentissage de la forme de fibre (12) est exécuté au moyen d'un forgeage des éléments fibreux (12) acheminés sous une forme rectiligne.

5. Procédé selon la revendication 4,
**caractérisé en ce que**
la forme de fibre (12) apprise est formée au moins par des crochets d'extrémité (15) forgés dans les éléments fibreux (12).

6. Procédé selon l'une des revendications précédentes,
**caractérisé en ce que**
pour l'obtention de la forme intermédiaire (13) compactée, les éléments fibreux (11) sont mis en une forme de couronne, une forme de pelote, une forme ondulée ou tordue ou une forme enroulée, moyennant quoi un accrochage des éléments fibreux (11) est empêché.

7. Procédé selon l'une des revendications précédentes,
**caractérisé en ce que**
la température de transition (T2) est sélectionnée d'une valeur de 40 °C à 50 °C.

8. Béton armé de microfibres (1), fabriqué avec un procédé selon l'une des revendications précédentes,
**caractérisé en ce que**
les éléments fibreux (11) présentent un alliage à mémoire de forme comprenant une base de cuivre et/ou de fer.
